(19) **Europäisches Patentamt / European Patent Office / Office européen des brevets**

(11) **EP 2 143 072 B1**

(12) **EUROPEAN PATENT SPECIFICATION**

(45) Date of publication and mention of the grant of the patent:
**23.08.2017 Bulletin 2017/34**

(51) Int Cl.:
**G06T 7/12** *(2017.01)*     **G06T 7/149** *(2017.01)*

(21) Application number: **08763047.1**

(22) Date of filing: **28.04.2008**

(86) International application number:
**PCT/IB2008/051631**

(87) International publication number:
**WO 2008/120177 (09.10.2008 Gazette 2008/41)**

(54) **PROGRESSIVE MODEL-BASED ADAPTATION**

PROGRESSIVE MODELLBASIERTE ADAPTION

ADAPTATION SUR LA BASE D'UN MODÈLE PROGRESSIF

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**13.01.2010 Bulletin 2010/02**

(73) Proprietors:
- **Koninklijke Philips N.V.**
  **5656 AE Eindhoven (NL)**
  Designated Contracting States:
  **AT BE BG CH CY CZ DK EE ES FI FR GB GR HR HU IE IS IT LI LT LU LV MC MT NL NO PL PT RO SE SI SK TR**
- **Philips Intellectual Property & Standards GmbH**
  **20099 Hamburg (DE)**
  Designated Contracting States:
  **DE**

(72) Inventors:
- **PETERS, Jochen**
  **52066 Aachen (DE)**
- **ECABERT, Olivier**
  **52066 Aachen (DE)**
- **SCHRAMM, Hauke**
  **24149 Kiel (DE)**
- **WEESE, Juergen**
  **52066 Aachen (DE)**
- **BERG, Jens Von**
  **22335 Hamburg (DE)**
- **LORENZ, Cristian**
  **22335 Hamburg (DE)**

(74) Representative: **van Velzen, Maaike Mathilde**
**Philips Intellectual Property & Standards**
**High Tech Campus 5**
**5656 AE Eindhoven (NL)**

(56) References cited:
**WO-A-03/021532**     **WO-A-2006/137013**

- **FRANASZEK M ET AL: "Colonic Polyp Segmentation in CT Colonography-Based on Fuzzy Clustering and Deformable Models" IEEE TRANSACTIONS ON MEDICAL IMAGING, IEEE SERVICE CENTER, PISCATAWAY, NJ, US, vol. 23, no. 11, 1 November 2004 (2004-11-01), pages 1344-1352, XP011121308 ISSN: 0278-0062**

**Description**

FIELD OF THE INVENTION

The invention relates to an image processing system, particularly, relates to a method and system for adapting a deformable model to an object of interest in an image data set. Furthermore, the invention relates to a computer program for implementing said adaptation method on a computer.

BACKGROUND OF THE INVENTION

Shape-constrained deformable models are successfully applied for medical image segmentations. The deformable model is represented by a mesh and the mesh adaptation to a new image is performed by minimizing an energy function, which is basically made of two contributions. The first one, called external energy, attracts the model to the object boundaries in the image, whereas the second one, called internal energy, penalizes deviations of the deformed model from the learned shape.

State of the art document WO 2006/137013, titled "Progressive model-based adaptation" and published on 2006 August 17, discloses an adaptation system for adapting a deformable model comprising a plurality of model elements to an object of interest in an image data set. The adaptation system comprises a selector for selecting at least one image-driven model element from the plurality of model elements and an adapter for adapting the deformable model on basis of optimizing a model energy of the deformable model, said model energy comprising an internal energy of the plurality of model elements and an external energy of the at least one image-driven model element, thereby adapting the deformable model. By enabling the adaptation system to selectively choose the image-driven model elements, the adaptation system of the current invention allows excluding a poorly adaptable model element from interacting with the image data set and thus from being pulled and/or pushed by the image data set into a wrong location.

WO 03/021532 discloses a method and an apparatus for segmentation of an object in a 2D or 3D image data set by extracting a path along the object in a selected region. The method comprises adapting an adaptable model to the object in a first active section around a start point. The method proceeds by iteratively finding the next point by copying geometric model parameters to a plurality of neighboring points of the active point, orienting a model around each of said plurality of neighboring points, adapting the models to the found object points for each neighboring point, selecting the neighboring point for which the adapted model fits best to the object as the next point of the selected region and as next active point. The iterations are repeated until an end point of the path or a predetermined number of iterations is reached.

Franaszek M et al., "Colonic polyp segmentation in CT colonography-based on fuzzy clusteing and deformable models", IEEE Transactions on Medical Imaging, Vol. 23, No. 11, 2004, pages 1344-1352, discloses colonic polyp segmentation based on fuzzy clustering and deformable models, guided by prior knowledge about the polyp. The deformable model is driven by the image force, an external balloon force and the intrinsic model force. Once the segmentation is generated on one slice, the procedure is propagated to neighboring slices. At the end, the 2D segmentations are stacked up to build a 3D segmentation.

SUMMARY OF THE INVENTION

Amongst other things it is an object of the invention to provide an adaptation system for adapting a deformable model to an object of interest in an image data set, which improves the robustness and flexibility of the adaptation.

To this end the invention provides an adaptation system for adapting a deformable model comprising a plurality of model segments (composed of one or multiple model elements) to an object of interest in an image data set, said system comprising: a propagator for propagating a set of predetermined transformation parameters to the model segments in the plurality of the model segments that have not yet been activated for adaptation to the image; an activator for activating at least one model segment from the plurality of model segments that have not yet been activated for adaptation to the image; and an adapter for adapting the deformable model by optimizing model energy of the deformable model, said model energy comprising internal energy of the plurality of model segments and external energy of at least the latest activated model segment(s).

A model segment from the plurality of model segments comprises information on a surface area of the deformable model. A model segment commonly comprises a plurality of model elements. An example of a model segment is a plurality of polygons of a polygon mesh representing the deformable model. Here, a model element in a model segment is represented by a polygon in the polygon mesh.

In the adaptation system according to the invention, the adaptation starts from a "reliable" model segment that is a well-initialized part of the deformable model. The adaptation at the beginning is called "an initial adaptation" and "a subsequent adaptation" is used to refer to an adaptation to be executed after the initial adaptation hereinafter.

The propagator is arranged to propagate a set of predetermined transformation parameters to the model segments in the plurality of the model segments that have not yet been activated for adaptation to the image.

In an embodiment of the adaptation system according to the invention, the set of predetermined transformation parameters for an initial adaptation is determined on the basis of prior knowledge of the object of interest or the transformation parameters of a well-adapted model part that the deformable model attaches to.

Furthermore, the set of predetermined transformation parameters for a subsequent adaptation is determined on the basis of the transformation parameters of at least the latest adapted model segment that has been adapted to the image after having been activated.

The activator is arranged to activate at least one model segment from the plurality of model segments that have not yet been activated for adaptation to the image.

In an embodiment, the activator is arranged to activate a model segment from the plurality of model segments for an initial adaptation on the basis of the prior knowledge of the object of interest or the proximity of the model segment to be activated to a well-adapted model part that the deformable model attaches to.

Furthermore, the activator is arranged to activate a model segment from the plurality of model segments that have not yet been activated for adaptation to the image for a subsequent adaptation on the basis of the proximity of the model segment to be activated to the latest model segment that has been adapted to the image after having been activated.

The adapter is arranged to optimize the model energy, for example, to compute the locations and orientations of the model elements in the model segments corresponding to the minimum of the model energy. The model energy comprises an internal energy contribution, which depends on the location of the model elements in the model segments relative to each other. Furthermore, the model energy comprises an external energy contribution, which depends on the locations of the model elements in the model segments, activated by the activator, relative to the image data set. The location of the model elements in each of the model segments that corresponds to the minimum of the model energy describes the resulting adapted deformable model.

By enabling propagation of the transformation parameters from the model segments that have been adapted to the image to the model segments that have not yet been adapted to the image, the invention can improve the robustness and flexibility of the adaptation.

The adaptation system of the present invention is useful for adapting a deformable model to an object of interest in a multidimensional image data set, in particular, in a 2D, in a 3D, or in a 4D image data set. The image data set can be obtained from any one of the many imaging modalities. The image data set can be, for example, a volumetric Magnetic Resonances Imaging (MRI) data set (i.e. 3D), a time-dependent volumetric Computed Tomography (CT) image data set (i.e. 4D), or a planar X-ray image (i.e. 2D).

It is a further object of the invention to provide an image processing system having the capability of adapting a deformable model comprising a plurality of model segments to an object of interest in an image data set. This is achieved by providing an image processing system comprising an adaptation system according to the present invention.

In an embodiment of this invention, the image processing system further comprises an acquisition system for acquiring image data of the object of interest and supplying the image data to the adaptation system.

It is a further object of the invention to provide an adaptation method for adapting a deformable model to an object of interest in an image data set that improves the robustness and flexibility of the adaptation. This is achieved by providing an adaptation method that comprises steps of propagating a set of predetermined transformation parameters to the model segments in the plurality of the model segments that have not yet been activated for adaptation to the image; activating at least one model segment from the plurality of model segments that have not yet been activated for adaptation to the image; and adapting the deformable model by optimizing model energy of the deformable model, said model energy comprising internal energy of the plurality of model segments and external energy of at least the latest activated model segment(s).

It is a further object of the invention to provide a computer program product executing an adaptation method for adapting a deformable model to an object of interest in an image data set that improves the robustness and flexibility of the adaptation. This is achieved in that the computer program product to be loaded by a computer arrangement comprises instructions for adapting a deformable model to an object of interest in an image data set, the computer arrangement comprising a processing unit and a memory, the computer program product, after being loaded, providing said processing unit with the capability to carry out the following tasks: propagating a set of predetermined transformation parameters to the model segments in the plurality of the model segments that have not yet been activated for adaptation to the image; activating at least one model segment from the plurality of model segments that have not yet been activated for adaptation to the image; and adapting the deformable model by optimizing model energy of the deformable model, said model energy comprising internal energy of the plurality of model segments and external energy of at least the latest activated model segment(s).

Modifications and variations of the image processing system, the method, and/or the computer program product, which correspond to modifications of the adaptation system and variations thereof, described above, can be carried out by a skilled person on the basis of the present description.

DESCRIPTION OF THE DRAWINGS

The above and other objects and features of the present invention will become more apparent from the following detailed description considered in connection with the accompanying drawings, in which:

> Fig. 1 schematically shows an embodiment of the adaptation system according to the invention;
> Fig. 2 schematically shows an embodiment of an image processing system comprising the adaptation system according to the invention;
> Fig. 3 schematically shows a flowchart of an embodiment of the adaptation method according to the invention; and
> Fig. 4 schematically shows an exemplary adaptation result obtained from the method according to the invention.

In these Figures identical parts are indicated by corresponding reference numerals.

DETAILED DESCRIPTION

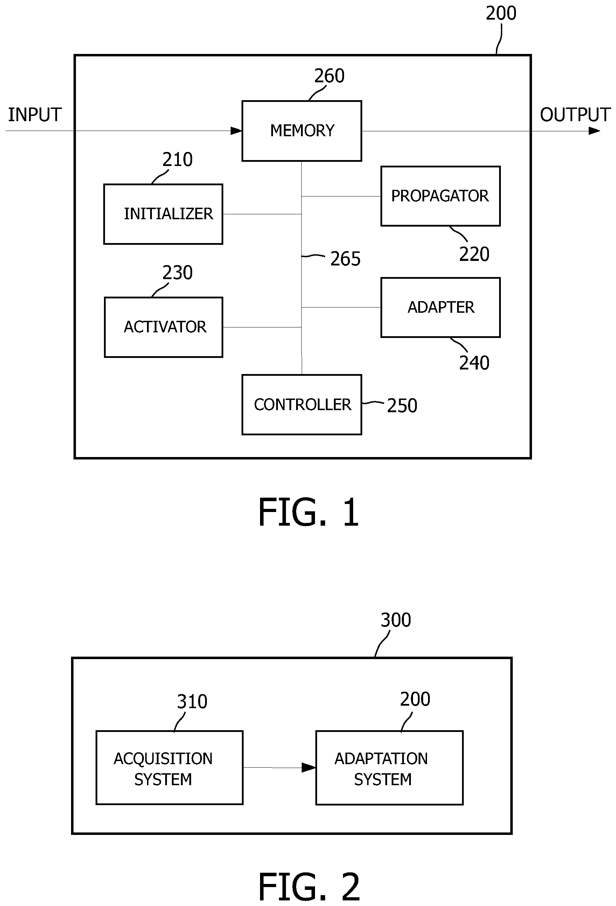

Fig. 1 shows a block diagram of an embodiment of the adaptation system 200 for adapting a deformable model comprising a plurality of model segments to an object of interest in an image data set, the system comprising: a propagator 220 for propagating a set of predetermined transformation parameters to the model segments in the plurality of the model segments that have not yet been activated for adaptation to the image; an activator 230 for activating at least one model segment from the plurality of model segments that have not yet been activated for adaptation to the image; and an adapter 240 for adapting the deformable model by optimizing model energy of the deformable model, said model energy comprising internal energy of the plurality of model segments and external energy of at least the latest activated model segment(s).

Optionally, the adaptation system 200 may comprise a controller 250 for controlling the adaptation process to iteratively adapt the deformable model.

Optionally, the adaptation system 200 may also comprise a memory unit 260 for storing data such as the image data set, the deformable model and/or the adapted deformable model, and a memory bus 265 for transmitting data among the units of the adaptation system 200.

The memory unit 260 is arranged to receive input data from external input devices and output data to external output devices under interface control. The input data received by the memory unit 260 may comprise the image data set, the deformable model data and other data for enabling the adaptation.

Advantageously the input data comprises a set of predetermined transformation parameters $T_0$ representing the initial orientation and scale of the deformable model for adaptation. The predetermined transformation parameters $T_0$ may be determined on the basis of the prior knowledge of the object of interest and/or the transformation parameters of a well-adapted model part, which the deformable model attaches to.

Optionally, the adaptation system 200 may also comprise an initializer 210 for initializing the deformable model. The initialization may involve, for example, placement of the deformable model near an object of interest and configuration of the vertices of the model. The initializer 210 may further be arranged to acquire or initialize the set of transformation parameters for an initial adaptation.

It is assumed that the deformable model is partitioned into a plurality of model segments $S_k$, $k = 1,2,\cdots,K,K$ being the number of model segments. Furthermore, each of the model segments is assigned to an independent transformation $T_k$, $k = 1,2,\cdots, K$, wherein the transformation could be an affined transformation or a similarity transformation. The adaptation starts from a "reliable" model segment and a set of predetermined transformation parameters propagated for each of the plurality of model segment.

For the initial adaptation, the propagator 230 is arranged to propagate the set of predetermined transformation parameters, initialized by the initializer 210 or directly retrieved from the memory unit 260, to each of the plurality of model segments.

Assuming that the transformation parameters for the plurality of model segments for initial adaptation is described as $T_k^1$, $k = 1,2,\cdots, K$, the propagation for the initial adaptation can be expressed as

$$T_k^1 = T_0, \ k = 1,2,\cdots, K \qquad\qquad [1]$$

In this way, the predetermined transformation parameters are propagated to the whole deformable model, which results in that the adaptation starts from a well-initialized orientation and/or a smooth transition with meaningful orientation of the attached model parts.

The activator 230 is arranged to activate a "reliable" model segment for adaptation to the image. The "reliable" model segment could be a well-initialized model segment on the basis of prior knowledge of the object of interest. When the deformable model is connected to a model part that has been well adapted, the "reliable" model segment could be a model segment that is the most proximal part connected to the well-adapted model part. For example, for the aorta connected to a well-adapted chamber, the "reliable" model segment is the most proximal part of the aorta connected to the chamber. Here, the "reliable" model segment that is activated by the activator 230 for the initial adaptation can be represented as $S_1$.

Once the first model segment is adapted, the activator 230 is further arranged to activate a new model segment for subsequent adaptation from the plurality of model segments that have not been activated for adaptation to the image. There are many ways to select a model segment from the remaining model segments to be activated for adaptation to the image. One possibility to select a model segment is to activate the model segment that is most proximal to the latest model segment that has been adapted to the image after having been activated. In the adaptation process, each of the plurality of model segments in the deformable model is activated in sequence for adaptation to the image until all $K$ model segments are completely adapted to the image.

During the initial adaptation, the transformation parameters $T_k^1$, $k = 1, 2, \cdots, K$ are optimized and updated. For subsequent adaptation, the propagator 220 is then further arranged to propagate the set of optimized transformation parameters of at least the latest model segment that has been adapted to the image after having been activated. The propagation of transformation parameters can be expressed as

$$T_k^{l+1} = T_{n,optimized}^l , \ k = n+1, \cdots, K \qquad [2]$$

wherein, $T_{n,optimized}^l$ is the optimized transformation parameters of the latest model segment that is adapted to the image after having been activated during the $l^{th}$ adaptation, $n$ is the sequence number of the latest model segment that has been adapted to the image after having been activated. It is also possible that the transformation parameters for propagation are determined on the basis of the transformation parameters of more than one latest model segments that have been adapted to the image after having been activated, for example, on the basis of two latest adapted model segments that are the most proximal to the model segment that is activated for adaptation to the image. As an example, the aorta and the pulmonary artery may inherit their transformation parameters from the left and right ventricles, respectively, to which they are anatomically attached.

For the model segments that have been adapted to the image after having been activated already, the transformation parameters used for $(l + 1)^{th}$ adaptation are

$$T_k^{l+1} = T_{k,optimized}^l , \ k = 1, 2, \cdots, n \qquad [3]$$

With propagation of the optimized transformation parameters of the latest model segments that have been adapted to the image after having been activated to the remaining model segments that have not been adapted to the image, the remaining model segments that have not been adapted to the image yet inherit the orientation and other transformation parameters (like scale or affine deformations) of the model segments that have already been adapted to the image. This enables each subsequent adaptation to start from a meaningful orientation and thus avoid getting stuck at misleading image boundaries because of improper model initialization of not yet adapted model parts.

The adapter 240 is arranged to optimize the model energy, for example, to compute the locations and orientations of the model segments corresponding to the minimum of the model energy. The model energy comprises an internal energy contribution, which depends on the location of the model elements in each of the plurality of model segments relative to each other. Furthermore, the model energy comprises an external energy contribution of the activated model segment(s) relative to the image data set. The external forces, responsible for the external energy contribution, attract the activated model segment(s) to their target locations in the image data set and/or prevent them from taking up false locations in the image data set. The locations of the model elements in each of the plurality of model segments that correspond to the minimum of the model energy, describe the deformable model that has been adapted to the image.

The method to adapt a mesh has been well discussed in a prior art document, for example, in the article "Shape constrained deformable models for 3D medical image segmentation" by J. Weese, V. Pekar, M. Kaus, C. Lorenz, S. Lobregt, and R. Truyen, published in Proc. IPMI, 380-387, Springer Verlag, 2001, hereinafter referred to as Ref. 1. In this article, the mesh adaption to a new image is performed minimizing an energy function, which is basically made up of an external energy term $E_{ext}$ and an internal energy term $E_{int}$, which can be expressed as

$$E = E_{ext} + \alpha E_{\text{int}} \qquad [4]$$

wherein the $\alpha$ is a parameter which balances the contribution of each energy.

Briefly, the external energy of Ref.1 may be expressed as

$$E_{ext} = \sum_{i \in \{S\}} \eta_i \left( \frac{\nabla I\left(x_i^{t\,\arg et}\right)}{\left\| \nabla I\left(x_i^{t\,\arg et}\right) \right\|} \left(x_i^{t\,\arg et} - c_i\right) \right)^2 \qquad [5]$$

where the sum is computed over the model elements in all of the plurality of model segments, for example, the mesh triangles "i" in all model segments $S$. The triangle centers $c_i$ are attracted towards target points $x_i^{t\,\arg et}$ detected at the object boundary. The projection of $\left(x_i^{t\,\arg et} - c_i\right)$ onto the normal vector $\nabla I/\|\nabla I\|$ at the target point makes the energy invariant to movements of the triangle within the object tangent plane, avoiding that the point remains stuck at the target position. Finally, the weights $\eta_i$ are large for reliably detected target points and small otherwise.

In the present embodiment, different from the external energy in [5], the contribution of the external energy is redefined as the contribution from the mesh triangles corresponding to the model segment(s) already activated. The external energy [5] can be rewritten as

$$E_{ext} = \sum_{k=1}^{n+1} \sum_{i \in S_k} \eta_i \left( \frac{\nabla I\left(x_i^{t\,\arg et}\right)}{\left\| \nabla I\left(x_i^{t\,\arg et}\right) \right\|} \left(x_i^{t\,arget} - c_i\right) \right)^2 \qquad [6]$$

wherein $n$ is the sequence number of the latest model segment that has been adapted to the image, $n + 1$ is the sequence number of the newly activated model segment for adaptation to the image. The sum is performed over the mesh triangles in activated model segments $S_k$, $k = 1,2,\cdots,n +1$, which corresponds to the $n + 1$ activated model segments.

Eq. [6] shows that only activated model segments are included for image driven adaptation. Optionally, the external energy in Eq. [6] may comprise contribution made of only part of the activated model segments. For example, only the latest model segment activated for adaptation to the image and the model segments that have recently been adapted to the image and are proximal to the latest model segment activated for adaptation to the image are used for the computation of the external energy. Formally, the sum in Eq. [6] would then start with k>1. This makes the adaptation possible in a more efficient way with less computation.

The internal energy term of Ref. 1 may be written as

$$E_{\text{int}} = \sum_{vertices\ i} F\left(x_i, N(x_i), T(m)\right) \qquad [7]$$

where $N(x_i)$ is a neighborhood comprising vertices $x_j$ around a vertex $x_i$, $m$ is the set of vertices $m_i$ of a reference shape-based model, T is a global transformation of the shape-based model, and $F[x_i,N(x_i),T(m)]$ is a contribution of vertex $x_i$ to the internal energy [7]. In the energy-minimizing frameworks the contribution F is typically implemented as a quadratic function of relative vertex displacements:

$$F\left(x_i, N(x_i), T(m)\right) = \sum_{j \in N(x_i)} \left(x_i - x_j - \left[T(m_i) - T(m_j)\right]\right)^2 \qquad [8]$$

In the present embodiment the consistency of the adapted deformable model is ensured by redefining the contribution of $i^{th}$ vertex $x_i$ to the internal energy as

$$F\left(x_i, N(x_i), T(m)\right) = F\left(x_i, N(x_i), T_k(m)\right) \qquad [9]$$

where $T_k(m)$ is the transformation of the $k^{th}$ model segment $S_k$, and $F[x_i,N(x_i),T_k(m)]$ represents the contribution from $i^{th}$

vertex $x_i$ in the model segment $S_k$.

Optimization of the deformable model in such energy minimizing frameworks as described in the above embodiment can be done in two steps, which are then iterated. First, the parameters of the transformation $T_k$ of each model segment are optimized with respect to the current vertex coordinates of the deformable model on the basis of minimizing the total energy of the model. Second, the vertex coordinates $x_i$ are computed to optimize the total energy using the transformation parameters $T_{k,optimized}$ determined in the first step for the model segments that have already been adapted to the image and the inherited transformation parameters for those model segments that have not been adapted to the image as indicated in Eq. [2]. The optimized vertex coordinates $x_i$ define the adapted model. For details of the optimization see Ref.1, particularly Section 2.4.

The controller 250 is arranged to control the adaptation process to progressively include a new model segment for subsequent adaptation until all model segments in the deformable model are adapted to the image. The adaptation is iterated by propagating the orientation of the latest model segment that has been adapted to the image to the remaining model segments to be adapted to the image. In this way, the model segments are able to follow the reorientation of the object of interest and the external image forces are always based on meaningful image boundaries since the search range always covers the vicinity of meaningful mesh parts that have already been adapted to the image.

The skilled person will understand that other embodiments of the adaptation system 200 according to the invention are also possible. It is possible, among other things, to redefine the units of the system and to reassign their function. For example, in an embodiment of the adaptation system 200 of the present invention, the activator 220 and the controller 250 can be implemented as one control unit combining the functions of the two units.

The initializer 210, the activator 220, the propagator 230, the adapter 240 and the controller 250 may be implemented using a processor. Normally, their functions are performed under the control of a software program product. During execution, the software program product is loaded into a memory, such as a RAM, and executed from there. The program may be loaded from a background memory, such as a ROM, hard disk, or magnetic and/or optical storage, or may be loaded via a network such as the Internet. Optionally an application specific integrated circuit may provide the described functionality.

There are many possible applications of the adaptation system 200 of the present invention. A particularly advantageous application is the application of the adaptation system 200 to medical image data sets. The object of interest in a medical image set can be, for example, internal organ, a bone, and/or a blood vessel. Furthermore, the adaptation system 200 of the present invention can be useful in other knowledge domains as long as it is possible to define a deformable model of the object of interest in a plurality of model segments with orientation relevance between two neighboring model segments.

Advantageously, the adaptation system of the invention can be used for segmenting an image data set. Fig. 2 schematically shows an embodiment of an image processing system 300 comprising the adaptation system 200 that is connected via an internal connection. Optionally, the image processing system 300 further comprises an image acquisition system 310, which is connected to the adaptation system via an internal connection. Examples of image acquisition systems are a CT system, an X-ray system, an MRI system, an Ultrasound system, a Positron Emission Tomography (PET), and a Single Photo Emission Computed Tomography (SPECT) system.

The image acquisition system 310 is arranged to acquire image data of an object of interest and provide an image data set comprising the object of interest to the adaptation system 200. The adaptation system 200 is arranged to adapt a deformable model to the object of interest in the image data set and then output the adapted deformable model as a representation of the object of interest for segmentation. This arrangement advantageously increases the capabilities of the image processing system 300 with robust image processing capabilities of the adaptation system 200.

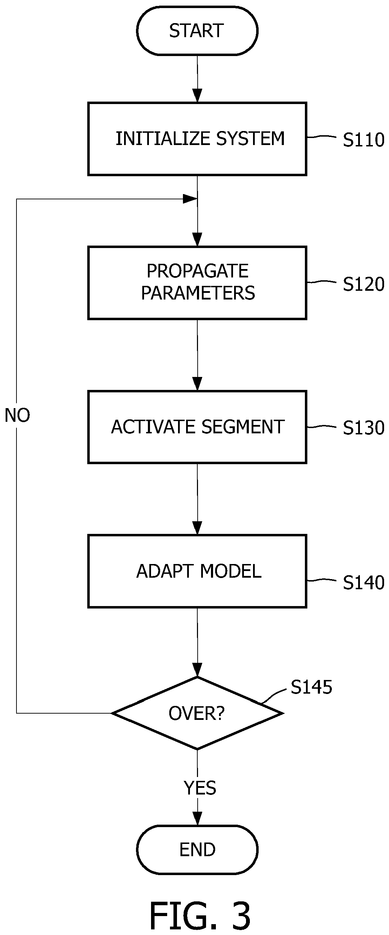

Fig. 3 shows a flowchart of an embodiment of the adaptation method according to the invention. The process of the method starts at initialization step 110, in which the deformable model is initialized in the image data set. The initialization may involve, for example, placement of the deformable model near an object of interest and initialization of the predetermined transformation parameters to be propagated to the plurality of model segments for the initial adaptation, based on the prior knowledge of the object of interest or an adapted object that the deformable model attaches to.

In propagation step S130, a set of transformation parameters is propagated to all the model elements that have not yet been adapted to the image. For initial adaptation, the set of transformation parameters is predetermined in the initialization step S110 and its propagation can be referred to Eq. [1]. For the subsequent adaptation, the set of transformation parameters to be propagated is the updated transformation parameters of the latest model segment that has been adapted to the image after having been activated and its propagation can be referred to Eq. [2] to [3].

In activation step S120 at least one model segment is activated for adaptation to the image. For initial adaptation, only a "reliable" model segment is activated on the basis of prior knowledge of the object of interest. When the object of interest is attached to a second object that is well adapted, the "reliable" model segment could be the most proximal part of the object of interest that is connected to the well-adapted second object. Otherwise, the "reliable" model segment could be a well-initialized model segment.

For subsequent adaptation, a new model segment is activated for adaptation to the image from the remaining model segments that have not yet been adapted to the image. One possibility to select a model segment for activation is that the model segment is most proximal to the latest model segment that has been adapted to the image.

In adaptation step S140, the deformable model is adapted by optimizing a model energy of the deformable model, the model energy comprising internal energy of the plurality of model segments and external energy of the activated model segment(s), and the transformation parameters of the activated model segment(s) being optimized during the adaptation. A detailed adaptation can be referred to Eq. [4] to [9] with combination of the teaching given in Ref. 1.

In control step S145, the adaptation process is determined whether it should be iterated for further adaptation or be terminated based on whether all model segments in the deformable model are adapted to the image. In the case where there is at least one model segment that has not yet been adapted to the image, the adaptation process goes back and repeats the steps of propagation, activation and adaptation to ensure that all model segments in the deformable model are well adapted to the image.

Further, the control step S 145 may comprise outputting the adapted deformable model as a representation of the object of interest for further processing.

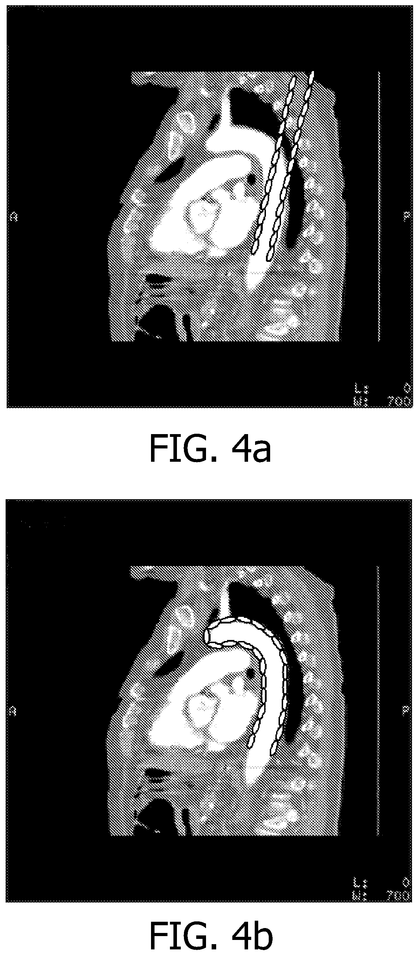

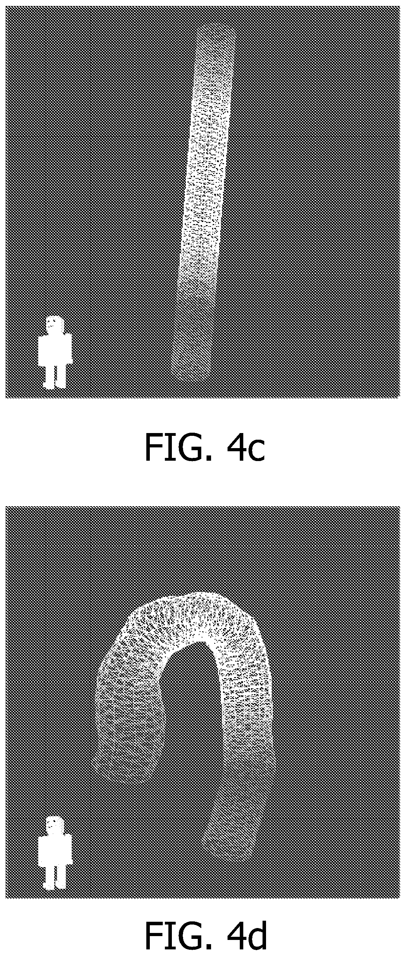

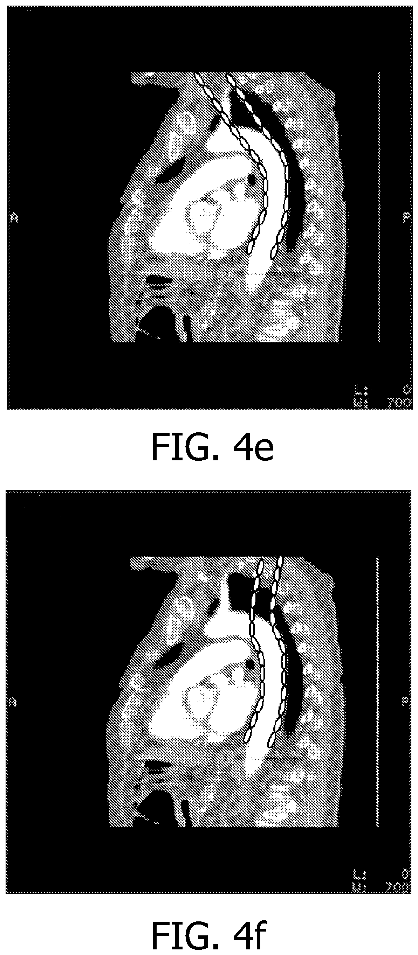

Fig. 4 illustrates an exemplary tube adaptation according to the invention. For the purpose of illustrating the effect of the adaptation according to the invention, a deformable model with tubular structure is taken for modeling blood vessels, such as aorta, pulmonary artery and veins. The tubular deformable model is divided into a plurality of tubular segments. This is most easily achieved by a stack of rings of vertices linked by polygons, such as triangles. A certain number of consecutive rings can then be taken to define one model segment.

The background information in Fig. 4 is a cardiac image. Fig. 4(a) shows an initial straight tube model of an aorta and Fig. 4(b) shows a fully adapted model with transformation propagation. Figs. 4(c) and 4(d) correspond to Fig. 4(a) and 4(b) without background information of the cardiac image. The initial straight tube is partitioned into 20 tubular segments starting from the lower end of the descending aorta and with the length of 10mm for each of the segments. Fig. 4(e) shows a halfway status of the progressive adaptation with propagation as that of the invention and Fig. 4(f) shows a halfway status of the progressive adaptation without propagation.

From Figs. 4(e) and 4(f), it is clear that during the progressive adaptation, the propagation of the last meaningful registration, i.e. the transformation parameters, is crucial to "bending" the still deactivated tubular segments into the right direction. The difference between the two figures is based on the fact that if the first $n$ segments of the tube are already adapted while the last $m$ segments are still deactivated, then it is expected that the $n^{th}$ segment gives rise to a reasonable estimation of the local tube orientation, which is reflected in the associated transformation parameter $T_{n,optimized}^{l}$.

It should be noted that the above-mentioned embodiments illustrate rather than limit the invention and that those skilled in the art will be able to design alternative embodiments without departing from the scope of the appended claims. In the claims, any reference signs placed between parentheses shall not be construed as limiting the claim. The word "comprising" does not exclude the presence of elements or steps not listed in a claim. The word "a" or "an" preceding an element does not exclude the presence of a plurality of such elements. The invention can be implemented by means of hardware comprising several distinct elements and by means of a suitably programmed computer. In the system claims enumerating several units, several of these units can be embodied by one and the same item of hardware of software.

## Claims

1. An adaptation system for adapting a deformable model comprising a plurality of model segments to an object of interest in an image data set, said system comprising:

   a propagator (220) for propagating a set of predetermined transformation parameters to the model segments in the plurality of the model segments that have not yet been activated for adaptation to the image;
   an activator (230) for activating at least one model segment from the plurality of model segments that have not yet been activated for adaptation to the image; and
   an adapter (240) for adapting the deformable model by optimizing a model energy of the deformable model, said model energy comprising an internal energy of the plurality of model segments and an external energy of at least the latest activated model segment or segments.

2. An adaptation system as claimed in claim 1, wherein the set of predetermined transformation parameters for an initial adaptation is determined on basis of prior knowledge of the object of interest or the transformation parameters of a well-adapted model part that the deformable model attaches to.

3. An adaptation system as claimed in claim 1, wherein the set of predetermined transformation parameters for a subsequent adaptation is determined on basis of the transformation parameters of at least the latest adapted model segment that has been adapted to the image after having been activated.

4. An adaptation system as claimed in claim 1, wherein the activator (230) is arranged to activate a model segment from the plurality of model segments that have not yet activated for adaptation to the image for a subsequent adaptation on basis of the proximity of the model segment to be activated to the latest model segment that has been adapted to the image after having been activated.

5. An adaptation system as claimed in claim 1, wherein the activator (230) is arranged to activate a model segment from the plurality of model segments for an initial adaptation on basis of the proximity of the model segment to be activated to a well-adapted model part that the deformable model attaches to.

6. An adaptation system as claimed in claim 1, wherein the adaptation system further comprises a controller (250) for controlling the adaptation process to iteratively adapt the deformable model.

7. An image processing system comprising the adaptation system for adapting a deformable model to an object of interest in an image data set as claimed in any one of claims 1 to 6.

8. An image processing system as claimed in claim 7 further comprising an acquisition system (310) for acquiring image data of the object of interest and providing the image data to the adaptation system.

9. A method for adapting a deformable model comprising a plurality of model segments to an object of interest in an image data set, comprising steps of:

  propagating (S120) a set of predetermined transformation parameters to the model segments in the plurality of the model segments that have not yet been activated for adaptation to the image;
  activating (S130) at least one model segment from the plurality of model segments that have not yet been activated for adaptation to the image; and
  adapting (S140) the deformable model by optimizing a model energy of the deformable model, said model energy comprising an internal energy of the plurality of model segments and an external energy of at least the latest activated model segment or segments.

10. A method as claimed in claim 9, wherein the set of predetermined transformation parameters for an initial adaptation is determined on basis of prior knowledge of the object of interest or the transformation parameters of a well-adapted model part that the deformable model attaches to.

11. A method as claimed in claim 9, wherein the set of predetermined transformation parameters for a subsequent adaptation is determined on basis of the transformation parameters of at least the latest model segment that has been adapted to the image after having been activated.

12. A computer program product to be loaded by a computer arrangement, comprising instructions for adapting a deformable model to an object of interest in an image data set, the computer arrangement comprising a processing unit and a memory, the computer program product, after being loaded, providing said processing unit with the capability to carry out the following tasks:

  propagating (S120) a set of predetermined transformation parameters to the model segments in the plurality of the model segments that have not yet been activated for adaptation to the image;
  activating (S130) at least one model segment from the plurality of model segments that have not yet been activated for adaptation to the image; and
  adapting (S140) the deformable model by optimizing a model energy of the deformable model, said model energy comprising an internal energy of the plurality of model segments and an external energy of at least the latest activated model segment or segments.

**Patentansprüche**

1. Adaptionssystem zur Adaption eines deformierbaren Modells mit mehreren Modellsegmenten an ein interessierendes Objekt in einem Bilddatensatz, wobei das System umfasst:

einen Propagator (220) zum Übertragen eines Satzes von vorher festgelegten Transformationsparametern auf die Modellsegmente der mehreren Modellsegmente, die noch nicht zur Adaption an das Bild aktiviert wurden; einen Aktivator (230) zum Aktivieren von mindestens einem Modellsegment aus den mehreren Modellsegmenten, die noch nicht zur Adaption an das Bild aktiviert wurden; sowie einen Adapter (240) zum Adaptieren des deformierbaren Modells durch Optimieren einer Modellenergie des deformierbaren Modells, wobei die Modellenergie eine innere Energie der mehreren Modellsegmente sowie eine äußere Energie von zumindest dem zuletzt aktivierten Modellsegment oder -segmenten umfasst.

2. Adaptionssystem nach Anspruch 1, wobei der Satz vorher festgelegter Transformationsparameter für eine initiale Adaption aufgrund von Vorkenntnissen über das interessierende Objekt oder der Transformationsparameter eines gut adaptierten Modellteils, an das sich das deformierbare Modell anlegt, ermittelt wird.

3. Adaptionssystem nach Anspruch 1, wobei der Satz vorher festgelegter Transformationsparameter für eine nachfolgende Adaption aufgrund der Transformationsparameter von zumindest dem zuletzt adaptierten Modellsegment, das nach erfolgter Aktivierung an das Bild adaptiert wurde, ermittelt wird.

4. Adaptionssystem nach Anspruch 1, wobei der Aktivator (230) so eingerichtet ist, dass er ein Modellsegment aus den mehreren Modellsegmenten, die noch nicht zur Adaption an das Bild aktiviert wurden, für eine nachfolgende Adaption aufgrund der Proximität des zu aktivierenden Modellsegments zu dem letzten Modellsegment, das nach Aktivierung an das Bild adaptiert wurde, aktiviert.

5. Adaptionssystem nach Anspruch 1, wobei der Aktivator (230) so eingerichtet ist, dass er ein Modellsegment aus den mehreren Modellsegmenten für eine initiale Adaption aufgrund der Proximität des zu aktivierenden Modellsegments zu einem gut adaptierten Modellteil, an das sich das deformierbare Modell anlegt, aktiviert.

6. Adaptionssystem nach Anspruch 1, wobei das Adaptionssystem weiterhin eine Steuereinheit (250) umfasst, um den Adaptionsprozess zur iterativen Adaption des deformierbaren Modells zu steuern.

7. Bildverarbeitungssystem, welches das Adaptionssystem zur Adaption eines deformierbaren Modells an ein interessierendes Objekt in einem Bilddatensatz nach einem der Ansprüche 1 bis 6 umfasst.

8. Bildverarbeitungssystem nach Anspruch 7, das weiterhin ein Erfassungssystem (310) umfasst, um Bilddaten des interessierenden Objekts zu erfassen und die Bilddaten dem Adaptionssystem zuzuführen.

9. Verfahren zur Adaption eines deformierbaren Modells mit mehreren Modellsegmenten an ein interessierendes Objekt in einem Bilddatensatz, das die folgenden Schritte umfasst, wonach:

ein Satz von vorher festgelegten Transformationsparametern auf die Modellsegmente der mehreren Modellsegmente, die noch nicht zur Adaption an das Bild aktiviert wurden, übertragen wird (S 120); mindestens ein Modellsegment aus den mehreren Modellsegmenten, die noch nicht zur Adaption an das Bild aktiviert wurden, aktiviert wird (S130); und das deformierbare Modell durch Optimieren einer Modellenergie des deformierbaren Modells adaptiert wird (S140), wobei die Modellenergie eine innere Energie der mehreren Modellsegmente sowie eine äußere Energie von zumindest dem zuletzt aktivierten Modellsegment oder -segmenten umfasst.

10. Verfahren nach Anspruch 9, wobei der Satz vorher festgelegter Transformationsparameter für eine initiale Adaption aufgrund von Vorkenntnissen über das interessierende Objekt oder der Transformationsparameter eines gut adaptierten Modellteils, an das sich das deformierbare Modell anlegt, ermittelt wird.

11. Verfahren nach Anspruch 9, wobei der Satz vorher festgelegter Transformationsparameter für eine nachfolgende Adaption aufgrund der Transformationsparameter von zumindest dem zuletzt adaptierten Modellsegment, das nach erfolgter Aktivierung an das Bild adaptiert wurde, ermittelt wird.

12. Computerprogrammprodukt, das durch eine Computeranordnung zu laden ist, umfassend Anweisungen zur Adaption eines deformierbaren Modells an ein interessierendes Objekt in einem Bilddatensatz, wobei die Computeranordnung eine Verarbeitungseinheit und einen Speicher umfasst, wobei das Computerprogrammprodukt nach Laden der Verarbeitungseinheit die Fähigkeit verleiht, die folgenden Ausgaben auszuführen, wonach:

ein Satz von vorher festgelegten Transformationsparametern auf die Modellsegmente der mehreren Modellsegmente, die noch nicht zur Adaption an das Bild aktiviert wurden, übertragen wird (S 120);

mindestens ein Modellsegment aus den mehreren Modellsegmenten, die noch nicht zur Adaption an das Bild aktiviert wurden, aktiviert wird (S130); und

das deformierbare Modell durch Optimieren einer Modellenergie des deformierbaren Modells adaptiert wird (S140), wobei die Modellenergie eine innere Energie der mehreren Modellsegmente sowie eine äußere Energie von zumindest dem zuletzt aktivierten Modellsegment oder -segmenten umfasst.

## Revendications

1.  Système d'adaptation pour adapter un modèle déformable comprenant une pluralité de segments de modèle à un objet d'intérêt dans un ensemble de données d'image, ledit système comprenant :

    un propagateur (220) pour propager un ensemble de paramètres de transformation prédéterminés aux segments de modèle dans la pluralité de segments de modèle qui n'ont pas encore été activés pour adaptation à l'image ;
    un activateur (230) pour activer au moins un segment de modèle à partir de la pluralité de segments de modèle qui n'ont pas encore été activés pour adaptation à l'image ; et
    un adaptateur (240) pour adapter le modèle déformable en optimisant une énergie de modèle du modèle déformable, ladite énergie de modèle comprenant une énergie interne de la pluralité de segments de modèle et une énergie externe d'au moins le dernier ou les derniers segments de modèle activés.

2.  Système d'adaptation selon la revendication 1, dans lequel l'ensemble de paramètres de transformation prédéterminés pour adaptation initiale est déterminé sur la base de la connaissance antérieure de l'objet d'intérêt ou des paramètres de transformation d'une partie de modèle bien adaptée à laquelle est attaché le modèle de déformation.

3.  Système d'adaptation selon la revendication 1, dans lequel l'ensemble de paramètres de transformation prédéterminés pour adaptation ultérieure est déterminé sur la base des paramètres de transformation d'au moins le dernier segment de modèle adapté qui a été adapté à l'image après avoir été activé.

4.  Système d'adaptation selon la revendication 1, dans lequel l'activateur (230) est agencé pour activer un segment de modèle parmi la pluralité de segments de modèle qui n'ont pas été encore activés pour adaptation à l'image pour une adaptation ultérieure sur la base de la proximité du segment de modèle à activer vis-à-vis du dernier segment de modèle qui a été adapté à l'image après avoir été activé.

5.  Système d'adaptation selon la revendication 1, dans lequel l'activateur (230) est agencé pour activer un segment de modèle parmi la pluralité de segments de modèle pour une adaptation initiale sur la base de la proximité du segment de modèle à activer vis-à-vis d'une partie de modèle bien adaptée à laquelle est attaché le modèle déformable.

6.  Système d'adaptation selon la revendication 1, dans lequel le système d'adaptation comprend en outre un dispositif de commande (250) pour commander le processus d'adaptation afin d'adapter de manière itérative le modèle déformable.

7.  Système de traitement d'image comprenant le système d'adaptation pour adapter un modèle déformable à un objet d'intérêt dans un ensemble de données d'image selon l'une quelconque des revendications 1 à 6.

8.  Système de traitement d'image selon la revendication 7 comprenant en outre un système d'acquisition (310) pour acquérir des données d'image de l'objet d'intérêt et fournir les données d'image au système d'adaptation.

9.  Procédé pour adapter un modèle déformable comprenant une pluralité de segments de modèle à un objet d'intérêt dans un ensemble de données d'image, comprenant les étapes consistant à :

    propager (S 120) un ensemble de paramètres de transformation prédéterminés aux segments de modèle dans la pluralité des segments de modèle qui n'ont pas encore été activés pour adaptation à l'image ;
    activer (S 130) au moins un segment de modèle parmi la pluralité de segments de modèle qui n'ont pas encore été activés pour adaptation à l'image ; et
    adapter (S 140) le modèle déformable en optimisant une énergie de modèle du modèle déformable, ladite énergie de modèle comprenant une énergie interne de la pluralité de segments de modèle et une énergie externe d'au moins le dernier ou les derniers segments de modèle activés.

10. Procédé selon la revendication 9, dans lequel l'ensemble de paramètres de transformation prédéterminés pour une adaptation initiale est déterminé sur la base de la connaissance antérieure de l'objet d'intérêt ou des paramètres de transformation d'une partie de modèle bien adaptée à laquelle est attaché le modèle de déformation.

11. Procédé selon la revendication 9, dans lequel l'ensemble de paramètres de transformation prédéterminés pour une adaptation ultérieure est déterminé sur la base des paramètres de transformation d'au moins le dernier segment de modèle qui a été adapté à l'image après avoir été activé.

12. Produit de programme informatique à charger par un agencement informatique, comprenant des instructions pour adapter un modèle déformable à un objet d'intérêt dans un ensemble de données d'image, l'agencement informatique comprenant une unité de traitement et une mémoire, le produit de programme informatique, après avoir été chargé, donnant à ladite unité de traitement la capacité de réaliser les tâches suivantes :

propager (S 120) un ensemble de paramètres de transformation prédéterminés aux segments de modèle dans la pluralité des segments de modèle qui n'ont pas encore été activés pour adaptation à l'image ;
activer (S 130) au moins un segment de modèle parmi la pluralité de segments de modèle qui n'ont pas encore été activés pour adaptation à l'image ; et
adapter (S 140) le modèle déformable en optimisant une énergie de modèle du modèle déformable, ladite énergie de modèle comprenant une énergie interne de la pluralité de segments de modèle et une énergie externe d'au moins le dernier ou les derniers segments de modèle activés.

FIG. 1

FIG. 2

FIG. 3

FIG. 4a

FIG. 4b

FIG. 4c

FIG. 4d

FIG. 4e

FIG. 4f

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006137013 A

- WO 03021532 A

**Non-patent literature cited in the description**

- **FRANASZEK M et al.** Colonic polyp segmentation in CT colonography-based on fuzzy clusteing and deformable models. *IEEE Transactions on Medical Imaging,* 2004, vol. 23 (11), 1344-1352

- Shape constrained deformable models for 3D medical image segmentation. **J. WEESE ; V. PEKAR ; M. KAUS ; C. LORENZ ; S. LOBREGT ; R. TRUYEN.** Proc. IPMI. Springer Verlag, 2001, 380-387